# EUROPEAN PATENT SPECIFICATION

(11) **EP 3 375 059 B1**
(45) Date of publication and mention of the grant of the patent: **21.10.2020**
(21) Application number: 16820330.5
(22) Date of filing: 11.11.2016
(51) Int. Cl.: H02B 1/056, H02B 1/20, H01R 25/14, H02G 5/06, H02G 5/02, H01R 25/16

(54) **MODULAR DISTRIBUTION BACK SUPPORT FOR CIRCUIT BREAKERS**
MODULARER VERTEILUNGSTRÄGER FÜR LEISTUNGSSCHALTER
SUPPORT DE DISTRIBUTION MODULAIRE POUR DISJONCTEURS

(30) Priority: 13.11.2015 IT UB20155556
(43) Date of publication of application: 19.09.2018
(73) Proprietor: Art.el. S.r.l., 55041 Camaiore (LU) (IT)
(72) Inventor: SARGENTINI, Stefano, 55049 Viareggio (LU) (IT)
(74) Representative: Leotta, Antonio
(86) International application number: PCT/IB2016/056812
(87) International publication number: WO 2017/081656

(56) References cited:
- WO-A1-00/36726
- WO-A1-2008/004776
- WO-A2-2009/141728
- WO-A2-2014/064617
- US-A- 2 737 613

## Description

### Technical field

The present invention relates to the technical field of electric components, with specific reference to those used for the construction of power distribution panels for industrial use.

### Background Art

In industrial power distribution panels is typically used a 380V three-phase electric current with high power applications that can reach and exceed 600A, in order to meet the power requirements of the machineries.

Such power distribution panels comprise a supporting structure shaped like a cabinet, inside which copper conductive rails carrying the electrical phases of the power line are arranged; various circuit breakers are fixed to the cabinet front panel, and connected to the three copper conductive rails of the power line and, in output, to the appliances to be served.

A copper conductive rails section must be appropriately sized according to the current flow rate expected, to prevent dangerous overheating.

Suitable type circuit breakers for these uses, are usually combined with a back support with a significant size, especially in depth.

The back support, made of insulating material, is electrically connected to the corresponding circuit breakers and equipped by connection terminals enabling to realize the various external connections.

For power distribution panels intended to operate with lower current flow rate, up to 100A, a known commercial solution can be used which provides for a plastic duct in which are housed, in parallel, the copper conductive rails of the phases.

The circuit breakers, in this case, can be placed side by side to each other and suitably connected to the conductive rails by bridge means provided for this purpose.

Each circuit breaker, and any back support, is a system itself, to be connected in parallel to the three-phase current which is carried by the copper conductive rails.

In general, therefore, the structure of the above mentioned power distribution panels provides, from a constructive point of view, copper conductive rails having a predetermined section area value, circuit breakers, and a set of accessory components suitable for assembling and wiring the circuit breakers and conductive copper rails, so as to ensure the necessary electrical insulation.

As a result the power distribution panels have a significant total size, which is often a problem when they have to be placed in a plant.

The increasing size is caused by that the supporting structure shaped like a cabinet is often made larger than necessary, in anticipation of the installation of more circuit breakers; consequently also the copper conductive rails are oversized in section, and having to extend over significant lengths a considerable costs increasing is got, being the copper price notoriously not cheap.

WO2014/064617 and US2737613 disclose a modular distribution back support for circuit breakers according to the preamble of claim 1.

### Summary of the invention

The object of the present invention is therefore to propose a modular distribution back support for circuit breakers, used for realizing power distribution panels with high current flow rate, adapted to incorporate conductive rails made of conductive materials carrying the electrical phases of the supply line, which is adapted to support a conventional circuit breaker suitable for the type of the application and which allows to provide the necessary electric connection between the circuit breaker and the conductive rails.

Another object of the invention is to provide a modular back support adapted to be mechanically and electrically coupled to other identical back supports, so as to compose the core of an expandable system in which the power supply rails housed in each back support can be connected to those of the adjacent back supports.

Still another object of the invention aims to provide a modular back support designed, by appropriate constructive features, for easy assembling and connecting the circuit breaker and for easy coupling and connecting with other back supports, which can be placed either above, below and/or at both sides.

A further object of the invention proposes to carry out a modular back support that thanks to its features allows to save copper during construction of power distribution panels, without limitations for the current flow rate.

Still another object of the invention is to provide a modular back support able to make the circuit breaker removable, without the need of providing additional components that change its configuration.

Another further object of the invention is to obtain a modular back support of regular shape, compact in size and to be produced by not sophisticated constructive methods and equipments, so to minimize costs.

These and other objects are fully achieved by a modular distribution back support for circuit breakers, with the latter of the type intended for high power applications, characterized in that it comprises: a box-like structure made of insulating material with a parallelepiped shape, in which is defined a front face adapted to receive and support the back side of one of said circuit breaker; fixing members able to make a circuit breaker integral with said box-like structure; at least three conductive rails made of conductive material, housed in said box-like structure so as to be electrically isolated from one another, intended to be electrically connected to corresponding phases of an external three phase power supply line; at least three holes, opening at said front face and extending towards the inside of the box-like structure, provided to receive the corresponding plug connectors, protruding from the back face of said circuit breaker and adapted to provide the electric connection between the latter and the above three conductive rails; at least three openings, made starting from each of the four side faces of said box-like structure which are perpendicular to said front face and extended towards the inside of the box-like structure itself, up to make accessible from the outside corresponding portions of said conductive rails, with each set of three openings of a side face aligned with the set of openings made in the opposite side face and with said modular distribution back support adapted to be placed side by side with one or more identical back supports, to form rows both in horizontal and vertical directions, in which the respective front face are coplanar, said openings being adapted to receive connecting means, extended through said openings and adapted to define electric bridge connections between the respective conductive rails, so that each distribution back support can be electrically connected in parallel to adjacent ones placed immediately above, below and at both sides.

### Brief description of the drawings

The features of the invention will be clear through the following description of a preferred embodiment of the modular distribution back support for circuit breakers in object, in accordance with the claims and thanks to the help of the attached drawings, in which:
- Fig. 1 shows an exploded schematic axonometric view of the modular back support in object;
- Fig. 2 shows a front view of the front face of the back support, on which a circuit breaker has to be placed;
- Fig. 3 shows a side view of Fig. 2, with back support components slightly set apart from each other, to make their identification easier;
- Fig. 4 shows a view similar to Fig. 3, with various components packed on one another;
- Fig. 5 shows a top view of Fig. 2, with components slightly set apart similarly to that illustrated in Fig. 3;
- Fig. 6 shows a view similar to Fig. 5, with various components packed on one another;
- Fig. 7 shows a section of the back support achieved according to the plane II-II of Fig. 2, coupled with a corresponding circuit breaker;
- Fig. 8 shows a schematic front view of the back support, and separated circuit breaker and connection means adapted to connect said back support with other ones;
- Fig. 9 shows a front view with back supports alongside each other, summarizing the expandability of a multiple back supports system.

### Description of preferred embodiments

In the above figures is shown with the reference 1, the modular distribution back support for circuit breakers of the invention, as a whole.

The modular back support 1 comprises a box-like structure 2, made of insulating material with a parallelepiped shape, in which is defined a front face 2A adapted to receive and support the back side of one of said circuit breakers 100, of a known type and in particular intended for high power applications.

The box-like structure 2 includes fixing members 3 adapted to fasten the circuit breaker 100 to the box-like structure.

In the illustrated example, said fixing members 3 comprise a set of fixing holes 30, perpendicular to the front face 2A with appropriate diameter and distance, adapted to be engaged with interference by self-tapping screws passing through the circuit breaker 100 and protruding from the back of said circuit breaker.

At least three conductive rails 41, 42, 43 made of conductive material, preferably copper, are housed in said box-like structure 2 so as to be electrically isolated from one another and intended to be electrically connected to corresponding phases of an external three phase power supply line, not shown.

According to a preferred embodiment, the aforementioned three conductive rails 41, 42, 43 are offset in the horizontal dimension of said box-like structure 2, as well as offset in the depth dimension of the latter.

In addition, each of the conductive rails 41, 42, 43 comprises a main branch 41A, 42A, 43A, extending vertically, so as to fill almost entirely a corresponding vertical housing of said box-like structure 2, and at least one secondary branch 41B, 42B, 43B, perpendicular to the main one, contained in the horizontal dimension of said box-like structure 2 and offset in the vertical dimension to the secondary branches of the conductive rails corresponding to the remaining phases of said three-phase line.

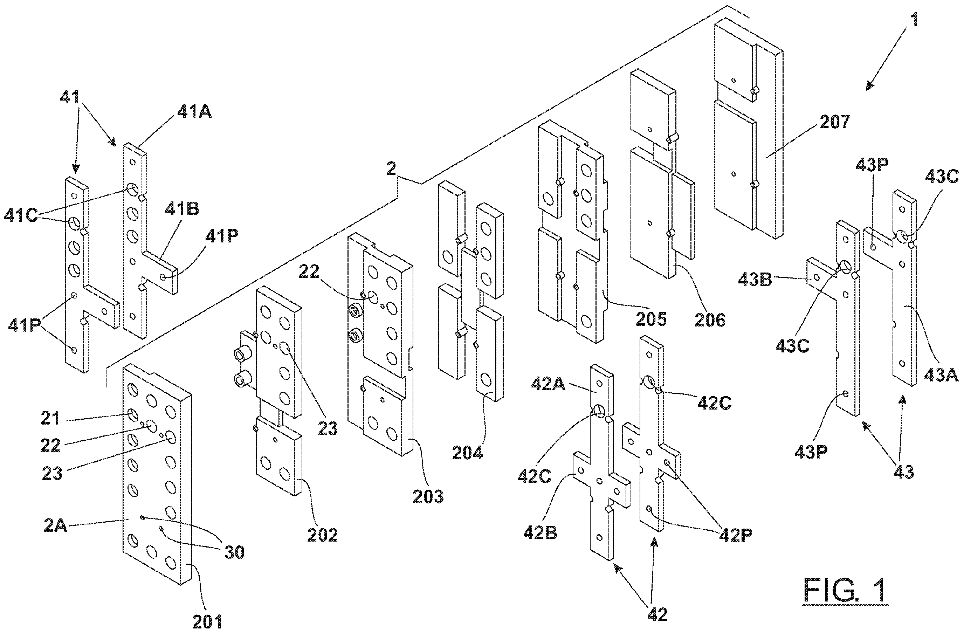

In the side conductive rails 41, 43, the respective secondary branch 41B, 43B is single and extends towards the inside of the box-like structure 2, while the central conductive rail 42 has a secondary branch 42B which extends bilaterally, and symmetrically, with respect to that main one 42A (Fig. 1).

At least three holes 21, 22, 23 opening at the front face 2A , and extending towards the inside of the box-like structure 2 are provided to receive the corresponding plug connectors 101, 102, 103, protruding from said back face of a circuit breaker 100 and adapted to provide the electric connection between the latter and the aforementioned three conductive rails 41, 42, 43.

In the main branch 41A, 42A, 43A of each of said conductive rails 41, 42, 43, is provided a connection hole 41C, 42C, 43C, coaxial to the corresponding hole 21, 22, 23 provided for the introduction of the respective plug connector 101, 102, 103.

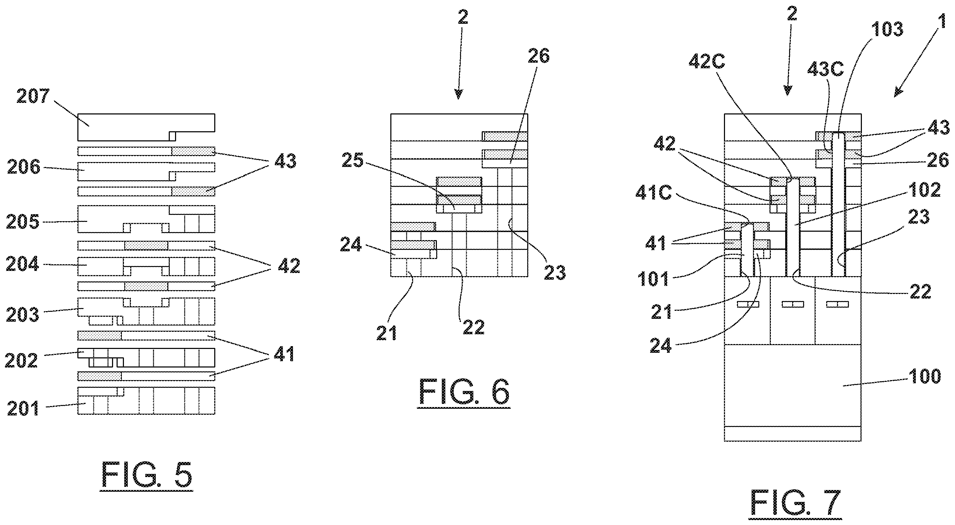

The connection holes 41C, 42C, 43C have an appropriate diameter to be in contact with the corresponding portions of said plug connectors 101, 102, 103, in order to ensure the electric connection (Fig. 7).

According to the invention, for each of the phases of the aforementioned three-phase power supply line is provided a single conductive rail 41, 42, 43, as described above, or, as shown in the attached figures, a pair of each of them, identical and overlapping, with insulating separators 41S, 42S, 43S interposed therebetween, and obtained in the aforementioned box-like structure 2, with the conductive rails of each pair intended to be electrically connected.

In this embodiment, the plug connectors 101, 102, 103 are sufficient in length to engage both the connection holes 41C, 42C, 43C of the corresponding pair of conductive rails 41, 42, 43.

In each of the four side faces 2B, 2C, 2D, 2E of the aforementioned box-like structure 2 which are perpendicular to said front face 2A, are provided at least three openings 24, 25, 26 extended toward the inside of the structure 2 thereof, up to make accessible from the outside corresponding portions of said conductive rails 41, 42, 43.

In the upper face 2B and lower face 2D the portions of the conductive rails 41, 42, 43 are made accessible at the respective main branches 41A, 42A, 43A, while in the right side face 2C and left side face 2E are made accessible the corresponding secondary branches 41B, 42B, 43B.

Each set of three openings 24, 25, 26 of a side face 2B, 2C, 2D, 2E is aligned with the set of openings in the opposite side face, for example those of the upper side face 2B with those of the lower side face 2D and those of the right side face 2C with those of the left side face 2E.

Due to this constructive solution, the modular back support 1 is adapted to be placed side by side with the said side faces 2B, 2C, 2D, 2E, with one or more identical back supports 1, to form rows both in horizontal and vertical directions, in which the respective front face 2A are coplanar and, at the same time, the openings 24, 25, 26 of the side faces placed side by side reciprocally are aligned.

By the use of connecting means 5, between each of said modular back support 1 and the other immediately adjacent in one or more orthogonal directions, electric bridge connection between the respective conductive rails 41, 42, 43 can be defined, so that each distribution back support 1 can be electrically connected in parallel to adjacent ones placed immediately above, below and at both sides.

Said connecting means 5 are composed, for example, of plates of appropriate length, made of conductive material, preferably copper, inserted in the corresponding openings 24, 25, 26 of two placed side by side faces and extended through said faces to connect the corresponding conductive rails 41, 42, 43.

The plates 5 are appropriately punched at the ends, so that after their insertion into the openings 24, 25, 26, the holes are coaxial with wiring holes 41P, 42P, 43P provided in the conductive rails 41, 42, 43, both if the latter are single and double.

Plates holes 5 and wiring holes 41P, 42P, 43P are adapted to be engaged by fastening elements, for example screw, not shown in detail, introduced through suitable holes provided in the box-like structure 2.

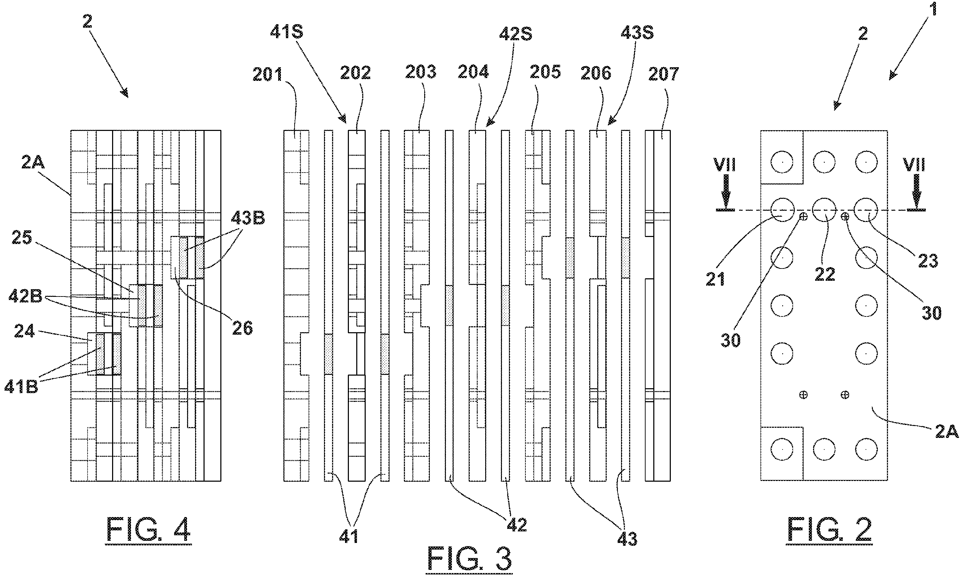

In a preferred embodiment, referred to in the attached figures, the box-like structure 2 is composed of a plurality of layers packed on one another, for example seven in number 201, 202, 203, 204, 205, 206, 207 starting from the one defining said front face 2A (see in particular Figs. 1, 3 and 5).

The layers 201, 202, 203, 204, 205, 206, 207 are rigidly coupled, for example by screw means not illustrated in detail, and each of them is shaped to define:
- said fixing holes 3;
- at least one of the above three holes 21, 22, 23;
- at least part of the housings in which are housed said conductive rails 41 42, 43;
- at least a part of the aforementioned openings 24, 25, 26.

In accordance with the embodiment in which the conductive rails 41,42, 43 are double, they are interposed with said layers, so that the layers also act as the mentioned insulating separators 41S, 42S, 43S: more in particular, the layer 202 realizes the insulating separator 41S between the pair of conductive rails 41, the layer 204 realizes the insulating separator 42S between the pair of conductive rails 42 while the layer 206 realizes the insulating separator 43S between the pair of conductive rails 43 (Figs. 1, 3, 4, 5).

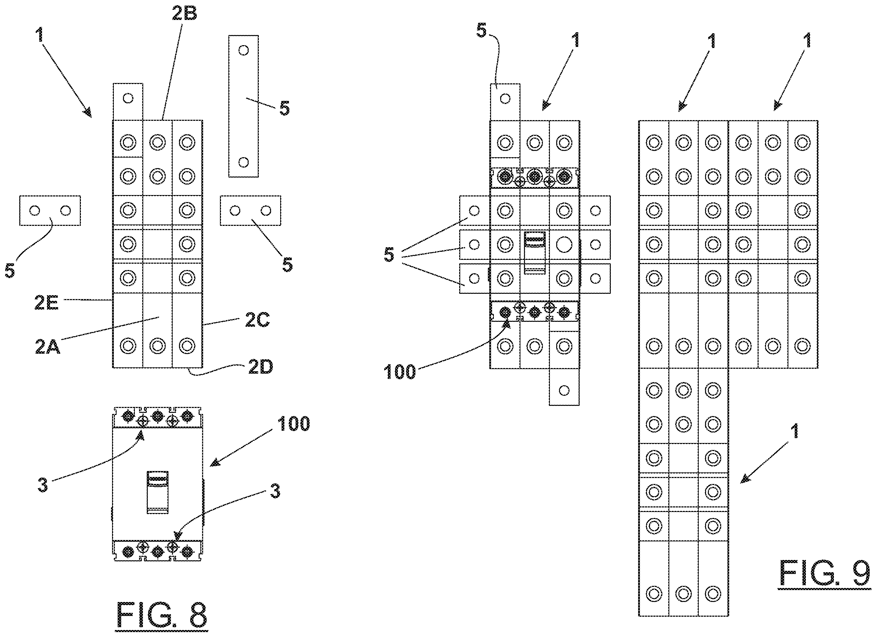

To visually exemplify the modular arrangements offered by the back support 1 in object, in Fig. 8 are shown, separately, in addition to one of said back supports 1, a circuit breaker 100 and some plates 5.

In Fig. 9, instead, the elements of Fig. 8 are shown joined, ready to be mechanically and electrically coupled to other identical back supports 1, so as to compose the core of an expandable system in which the power supply conductive rails 41, 42, 43 housed in each back support 1 can be connected to those of the adjacent back supports 1.

According to what above described, in particular for skilled in the art, the advantageous features of the present invention are evident, and enable to produce power distribution panels, even intended for high power applications, in a completely new way compared to the constructive criteria adopted with the prior art solutions, implementing a saving in overall size of the distribution panel.

Copper conductive rails carrying the electrical phases of the supply line are housed inside the modular back support in object so as to not have to arrange the rails externally, with evident advantages.

The modular back support, as described, is able for supporting a conventional circuit breaker, adapted to provide the electric connection between the circuit breaker itself and the conductive rails and to allow couplings with other back supports and other circuit breakers only having to arrange connecting plates, with unlimited expansion capability.

The modular back support has, advantageously, all the constructive features enabling to mount and connect easily the circuit breaker and to couple and connect easily the modular back support with other back supports arranged above, below and/ or at both sides.

Thanks in that the back support is compact in size and conductive rails are housed inside the back support and back supports can be modularly coupled in reduced spaces, the total weight of the copper conductive rails is considerably lower, being equal the current flow rate and the power distribution panel framework, with the obvious benefits in costs saving.

In addition to the specific features above mentioned, the modular back support of the present invention provides an additional interesting plus for which a brief mention to the prior art is needed: the mentioned circuit breakers can be mounted on conventional back supports in a fixed, removable or extractable manner.

It is a removable circuit breaker if it can be set apert from the back support, both functionally and physically, by unscrewing the fixing screws fastening the first to the second; it is a extractable circuit breaker if for its removal, elements coupled as a sled are used, a part of which are joined to the back support fixed part and a part to the circuit breaker.

To set up a prior art back support able to make the circuit breaker removable or extractable, it should be provided with suitable accessory components also relating to electric connection elements, with the resulting costs increasing; in the proposed modular back support, instead, thanks to the connection achieved by plug connectors, the removability and extractability are obtained directly by the described structure, without additional components, and, therefore, without the cost increases.

Another feature of the invention to be highlighted is the regular shape and compact size of the modular back support, which can be produced by not sophisticated constructive methods and equipments, in particular the embodiment composed of several layers packed on one another.

However it is understood that the above is described as an example and it's not limiting, and therefore, any changes of detail necessary for technical and / or functional reasons have to be considered when they fall within the scope of protection as claimed below.

## Claims

1. Modular distribution back support for circuit breakers, with the latter of the type intended for high power applications, **characterized in that** it comprises:
- a box-like structure (2) made of insulating material with a parallelepiped shape, in which is defined a front face (2A) adapted to receive and support the back side of a circuit breaker (100);
- fixing members (3) able to make a circuit breaker (100) integral with said box-like structure (2);
- at least three conductive rails (41, 42, 43) made of conductive material, housed in said box-like structure (2) so as to be electrically isolated from one another, intended to be electrically connected to corresponding phases of an external three phase power supply line;
- at least three holes (21, 22, 23), opening at said front face (2A) and extending towards the inside of the box-like structure (2), provided to receive the corresponding plug connectors (101, 102, 103), protruding from the back face of a circuit breaker (100) and adapted to provide the electric connection between the latter and the above three conductive rails (41, 42, 43);
- at least three openings (24, 25, 26), made starting from each of the four side faces (2B, 2C, 2D, 2E) of said box-like structure (2) which are perpendicular to said front face (2A) and extended towards the inside of the box-like structure (2) itself, up to make accessible from the outside corresponding portions of said conductive rails (41, 42, 43), with each set of three openings (24, 25, 26) of a side face aligned with the set of openings made in the opposite side face and with said modular distribution back support (1) adapted to be placed side by side with one or more identical back supports (1), to form rows both in horizontal and vertical directions, in which the respective front face (2A) are coplanar, said openings being adapted to receive connecting means (5), extended through said openings (24, 25, 26) of two adjacent modular back supports (1) and adapted to define electric bridge connections between the respective conductive rails (41, 42, 43), so that each distribution back support (1) can be electrically connected in parallel to adjacent ones placed immediately above, below and at both sides.

2. Modular distribution back support according to claim 1, **characterized in that** said box-like structure (2) is composed of a plurality of layers (201, 202, 203, 204, 205, 206, 207) packed on one another and rigidly coupled, each of which is shaped to define at least part of the housings in which said conductive rails (41, 42, 43) are contained and at least part of said openings (24, 25, 26). directed from the latter towards the outside.

3. Modular distribution back support according to claim 1 or 2, **characterized in that** each of said conductive rails (41, 42, 43) comprises a main branch (41A, 42A, 43A) extending vertically, so as to fill almost entirely a corresponding vertical housing of said box-like structure (2), and at least one secondary branch (41B, 42B, 43B), perpendicular to the main one, contained in the horizontal dimension of said box-like structure (2) and offset in the vertical dimension to the secondary branches (41B, 42B, 43B) of the conductive rails (41 , 42, 43) corresponding to the remaining phases of said three-phase line.

4. Modular distribution back support according to claim 1 or 2 or 3, **characterized in that** the said at least three main branches of the conductive rails (41, 42, 43) are offset in the horizontal dimension of said box-like structure (2), as well as offset in the depth dimension of the latter.

5. Modular distribution back support according to claim 1 or 2, **characterized in that** for each of the phases of the aforementioned three-phase power supply line is provided a pair of identical and overlapping conductive rails (41, 42, 43), with insulating separators (41S, 42S, 43S) interposed therebetween and obtained in the aforementioned box-like structure (2), with the conductive rails (41, 42, 43) of each pair intended to be electrically connected.

6. Modular distribution back support according to any preceding claim, **characterized in that** at each of said conductive rails (41, 42, 43) are provided connecting holes (41C, 42C, 43C), coaxial to said holes (21, 22, 23) provided for the introduction of said plug connectors (101, 102, 103), the same connection holes (41C, 42C, 43C) being intended to be in contact with the corresponding portions of said plug connectors to ensure the electric connection.

7. Modular distribution back support according to claim 1 or 2, **characterized in that** in each of said conductive rails (41, 42, 43) are provided wiring holes (41P, 42P, 43P), adapted to be engaged by fastening elements provided for fastening said connecting means (5) to the respective conductive rails (41, 42, 43).

8. Modular distribution back support according to claim 1 or 2, **characterized in that** said fixing members (3) comprise a set of fixing holes (30) provided in said box-like structure (2), extended from the aforementioned front face (2A) towards the inside, adapted to be engaged by screw means to fasten said circuit breaker (100) to the box-like structure (2) itself.

## Patentansprüche

1. Modularer Verteiler-Rückseitenträger für Leistungsschalter, wobei letzterer für Hochleistungsanwendungen bestimmt ist, **dadurch gekennzeichnet daß** er Folgendes umfasst:
- eine kastenförmige Struktur (2) aus isolierendem Material in Form eines Parallelepipeds, in der eine Vorderseite (2A) definiert ist, die dazu bestimmt ist, die Rückseite eines Leistungsschalters (100) aufzunehmen und zu tragen;
- Befestigungselemente (3), die in der Lage sind, einen Schutzschalter (100) einstückig mit der kastenartigen Struktur (2) herzustellen;
- mindestens drei leitenden Schienen (41, 42, 43) aus leitendem Material, die in der kastenartigen Struktur (2) so untergebracht sind, dass sie voneinander elektrisch isoliert sind, und die dazu bestimmt sind, mit entsprechenden Phasen einer externen Dreiphasen-Stromversorgungsleitung elektrisch verbunden zu werden;
- mindestens drei Löcher (21, 22, 23), die sich an der Vorderseite (2A) öffnen und sich in das Innere der kastenartigen Struktur (2) erstrecken, die zur Aufnahme der entsprechenden Steckverbinder (101, 102, 103) vorgesehen sind, von der Rückseite eines Leistungsschalters (100) vorstehen und geeignet sind, die elektrische Verbindung zwischen diesem und den drei oben genannten Leiterschienen (41, 42, 43) herzustellen;
- mindestens drei Öffnungen (24, 25, 26), die ausgehend von jeder der vier Seitenflächen (2B, 2C, 2D, 2E) der kastenförmigen Struktur (2), die senkrecht zu der Vorderfläche (2A) sind, ausgebildet sind und sich in Richtung auf das Innere der kastenförmigen Struktur (2) selbst bis zu den entsprechenden Abschnitten der Leiterschienen (41,42, 43) von außen zugänglich machen, wobei jeder Satz von drei Öffnungen (24, 25, 26) einer Seitenfläche mit dem Satz von Öffnungen ausgerichtet ist, die in der gegenüberliegenden Seitenfläche ausgebildet sind, und wobei der Modularer Verteiler-Rückseitenträger (1) zur Verteilung so angepasst ist, dass er mit einer oder mehreren identischen Rückseitenträgern (1) nebeneinander angeordnet werden kann, um Reihen sowohl in horizontaler als auch in vertikaler Richtung zu bilden, in denen die jeweilige Vorderseite (2A) koplanar ist, wobei die Öffnung dazu geeignet ist, Verbindungsmittel (5) aufzunehmen, die sich durch die Öffnungen (24, 25, 26) zweier benachbarter modularer Rückseitenträger (1) erstrecken und dazu geeignet sind, elektrische Brückenverbindungen zwischen den jeweiligen leitende Schienen (41, 42, 43) zu definieren, so dass jeder Verteiler-Rückseitenträger (1) elektrisch parallel zu benachbarten, unmittelbar darüber, darunter und an beiden Seiten angeordneten, elektrisch verbunden werden kann.

2. Modularer Verteiler-Rückseitenträger nach Anspruch 1, **dadurch gekennzeichnet, daß** die kastenartige Struktur (2) aus einer Vielzahl von Schichten (201, 202, 203, 204, 205, 206, 207) zusammengesetzt ist, die aufeinander gepackt und starr gekoppelt sind, von denen jede so geformt ist, dass sie zumindest einen Teil der Gehäuse definiert, in denen die leitende Schienen (41, 42, 43) enthalten sind und zumindest ein Teil der Öffnungen (24, 25, 26) von letzteren nach außen gerichtet ist.

3. Modularer Verteiler-Rückseitenträger nach Anspruch 1 oder 2, **dadurch gekennzeichnet daß** jede der leitende Schienen (41, 42, 43) einen Hauptabschnitt (41A, 42A, 43A), der sich vertikal erstreckt, so dass er fast vollständig ein entsprechendes vertikales Gehäuse der kastenartigen Struktur (2) ausfüllt, und mindestens einen sekundären Abschnitt (41B, 42B, 43B), senkrecht zu dem Hauptabschnitt, in der horizontalen Dimension der kastenartigen Struktur (2) enthalten und in der vertikalen Dimension zu den sekundären Abschnitt (41B, 42B, 43B) der leitende Schienen (41 , 42, 43), die den übrigen Phasen der Dreiphasenleitung entsprechen, versetzt.

4. Modularer Verteiler-Rückseitenträger nach Anspruch 1 oder 2 oder 3, **dadurch gekennzeichnet, dass** die mindestens drei Abschnitte der leitende Schienen (41, 42, 43) in der horizontalen Dimension der kastenartigen Struktur (2) sowie in der Tiefenabmessung der letzteren versetzt sind.

5. Modularer Verteiler-Rückseitenträger nach Anspruch 1 oder 2, **dadurch gekennzeichnet, dass** für jede der Phasen der vorgenannten dreiphasigen Stromversorgungsleitung ein Paar identischer und überlappender leitende Schienen (41, 42, 43) mit dazwischen angeordneten und in der vorgenannten kastenartigen Struktur (2) erhaltenen isolierenden Separatoren (41S, 42S, 43S) vorgesehen ist, wobei die leitende Schienen (41, 42, 43) jedes Paares elektrisch verbunden werden sollen.

6. Modularer Verteiler-Rückseitenträger nach irgendeinem vorhergehenden Anspruch, **dadurch gekennzeichnet, dass** an jeder der leitende Schienen (41, 42, 43) Verbindungslöcher (41C, 42C, 43C) vorgesehen sind, die koaxial zu den Löchern (21, 22, 23) sind, die für die Einführung der Steckverbinder (101, 102, 103) vorgesehen sind, wobei die gleichen Verbindungslöcher (41C, 42C, 43C) dazu bestimmt sind, mit den entsprechenden Abschnitten der Steckverbinder in Kontakt zu sein, um die elektrische Verbindung sicherzustellen.

7. Modularer Verteiler-Rückseitenträger nach Anspruch 1 oder 2, **dadurch gekennzeichnet, dass** in jeder der leitenden Schienen (41, 42, 43) Verdrahtungslöcher (41P, 42P, 43P) vorgesehen sind, die dazu bestimmt sind, mit Befestigungselementen in Eingriff gebracht zu werden, die zur Befestigung der Verbindungsmittel (5) an den jeweiligen leitenden Schienen (41, 42, 43) vorgesehen sind.

8. Modularer Verteiler-Rückseitenträger nach Anspruch 1 oder 2, **dadurch gekennzeichnet, dass** die Befestigungselemente (3) einen Satz von Befestigungslöchern (30) aufweisen, die in der kastenartigen Struktur (2) vorgesehen sind, die sich von der vorgenannten Vorderseite (2A) nach innen erstrecken und geeignet sind, mit Schraubmitteln in Eingriff gebracht zu werden, um den Leistungsschalter (100) an der kastenartigen Struktur (2) selbst zu befestigen.

## Revendications

1. Support dorsal de distribution modulaire pour disjoncteurs, ce dernier étant du type destiné aux applications de forte puissance, **caractérisé en ce qu'**il comprend:
- une structure en forme de boîte (2) en matériau isolant de forme parallélépipédique, dans laquelle est définie une face avant (2A) adaptée pour recevoir et supporter la face arrière d'un disjoncteur (100);
- des éléments de fixation (3) capables de rendre un disjoncteur (100) solidaire de ladite structure en forme de boîte (2);
- au moins trois rails conducteurs (41, 42, 43) en matériau conducteur, logés dans ladite structure en forme de boîte (2) de manière à être isolés électriquement les uns des autres, destinés à être connectés électriquement aux phases correspondantes d'une ligne d'alimentation électrique triphasée externe;
- au moins trois trous (21, 22, 23), qui s'ouvrant au niveau de ladite face avant (2A) et s'étendant vers l'intérieur de la structure en forme de boîte (2), prévus pour recevoir les connecteurs à fiches correspondants (101, 102, 103), qui faisant saillie de la face arrière d'un disjoncteur (100) et qui sont adaptés pour assurer la connexion électrique entre ce dernier et les trois rails conducteurs (41, 42, 43) ci-dessus;
- au moins trois ouvertures (24, 25, 26), réalisées à partir de chacune des quatre faces latérales (2B, 2C, 2D, 2E) de ladite structure en forme de boîte (2) qui sont perpendiculaires à ladite face avant (2A) et se prolongent vers l'intérieur de la structure en forme de boîte (2) elle-même, jusqu'à rendre accessibles de l'extérieur des parties correspondantes desdits rails conducteurs (41, 42, 43), chaque ensemble de trois ouvertures (24, 25, 26) d'une face latérale étant aligné avec l'ensemble des ouvertures pratiquées dans la face latérale opposée et ledit support arrière de distribution modulaire (1) étant adapté pour être placé côte à côte avec un ou plusieurs supports arrière identiques (1), pour former des rangées tant à direction horizontale qu'à la direction verticale, dans lesquelles les faces avant (2A) respectives sont coplanaires, ladite ouverture étant adaptée pour recevoir des moyens de connexion (5) qui s'étendant à travers lesdites ouvertures (24, 25, 26) de deux supports dorsals modulaires adjacents (1) et adaptée pour définir des connexions de pont électrique entre les rails conducteurs respectifs (41, 42, 43), de sorte que chaque support dorsal de distribution (1) peut être connecté électriquement en parallèle à ceux adjacents placés immédiatement au-dessus, en dessous et des deux côtés.

2. Support dorsal de distribution modulaire selon la revendication 1, **caractérisée en ce que** ladite structure en forme de boîte (2) est composée d'une pluralité de couches (201, 202, 203, 204, 205, 206, 207) empilées les unes sur les autres et couplées de manière rigide, chacune d'entre elles étant formée pour définir au moins une partie des logements dans lesquels lesdits rails conducteurs (41, 42, 43) sont contenus et au moins une partie desdites ouvertures (24, 25, 26) dirigées à partir de ces dernières vers l'extérieur.

3. Support dorsal de distribution modulaire selon la revendication 1 ou 2, **caractérisée en ce que** chacun desdits rails conducteurs (41, 42, 43) comprend une branche principale (41A, 42A, 43A) qui s'étendant verticalement, de manière à remplir presque entièrement un logement vertical correspondant de ladite structure en forme de boîte (2), et au moins une branche secondaire (41B, 42B, 43B), perpendiculaire à la principale, contenue dans la dimension horizontale de ladite structure en forme de boîte (2) et décalée dans la dimension verticale par rapport aux branches secondaires (41B, 42B, 43B) des rails conducteurs (41, 42, 43) correspondant aux phases restantes de ladite ligne triphasée.

4. Support dorsal de distribution modulaire selon la revendication 1 ou 2 ou 3, **caractérisée en ce que** lesdites au moins trois branches principales des rails conducteurs (41, 42, 43) sont décalées dans la dimension horizontale de ladite structure en forme de boîte (2), ainsi que décalées dans la dimension de profondeur de cette dernière.

5. Support dorsal de distribution modulaire selon la revendication 1 ou 2, **caractérisée en ce que** pour chacune des phases de la ligne d'alimentation électrique triphasée susmentionnée est prévue une paire de rails conducteurs identiques et se chevauchant (41, 42, 43), avec des séparateurs isolants (41S, 42S, 43S) interposés entre eux et obtenus dans la structure en forme de boîte (2) susmentionnée, les rails conducteurs (41, 42, 43) de chaque paire étant destinés à être connectés électriquement.

6. Support dorsal de distribution modulaire selon l'une quelconque des revendications précédentes, **caractérisée en ce que** à chacun desdits rails conducteurs (41, 42, 43) sont prévus des trous de connexion (41C, 42C, 43C), coaxiaux auxdits trous (21, 22, 23) prévus pour l'introduction desdits connecteurs à fiches (101, 102, 103), les mêmes trous de connexion (41C, 42C, 43C) étant destinés à être en contact avec les parties correspondantes desdits connecteurs à fiches pour assurer la connexion électrique.

7. Support dorsal de distribution modulaire selon la revendication 1 ou 2, **caractérisée en ce que** dans chacun desdits rails conducteurs (41, 42, 43) sont prévus des trous de câblage (41P, 42P, 43P), adaptés pour être engagés par des éléments de fixation prévus pour fixer lesdits moyens de connexion (5) aux rails conducteurs respectifs (41, 42, 43).

8. Support dorsal de distribution modulaire selon la revendication 1 ou 2, **caractérisée en ce que** lesdits éléments de fixation (3) comprennent un ensemble de trous de fixation (30) prévus dans ladite structure en forme de boîte (2), qui s'étendant de la face avant (2A) susmentionnée vers l'intérieur, adaptés pour être engagés par des moyens de vis pour fixer ledit disjoncteur (100) à la structure en forme de boîte (2) elle-même.
